## Europäisches Patentamt

## European Patent Office

## Office européen des brevets

(11) Veröffentlichungsnummer: **0 282 849**
**B1**

(12) **EUROPÄISCHE PATENTSCHRIFT**

(45) Veröffentlichungstag der Patentschrift:
**28.11.90**

(21) Anmeldenummer: **88103428.4**

(22) Anmeldetag: **05.03.88**

(51) Int. Cl.⁵: **B65B 53/06**

(54) Vorrichtung zum Erzeugen von Heissgas für das Schrumpfen von Kuststofffolien.

(30) Priorität: **18.03.87  DE 8704033 U**

(43) Veröffentlichungstag der Anmeldung:
**21.09.88 Patentblatt 88/38**

(45) Bekanntmachung des Hinweises auf die Patenterteilung:
**28.11.90 Patentblatt 90/48**

(84) Benannte Vertragsstaaten:
**AT BE CH DE ES FR GB GR IT LI LU NL SE**

(56) Entgegenhaltungen:
**EP-A- 0 064 636**
**DD-A- 148 670**

(73) Patentinhaber: **MSK-Verpackungs-Systeme Gesellschaft mit beschränkter Haftung, Benzstrasse Postfach 1610, D-4190 Kleve(DE)**

(72) Erfinder: **Hannen, Reiner, Nachtigallenweg 6, D-4180 Goch-Pfalzdorf(DE)**
Erfinder: **Vermeulen, Norbert, Hahnenacker 4, D-4190 Kleve-Warbeyen(DE)**

(74) Vertreter: **Stark, Walter, Dr.-Ing., Moerser Strasse 140, D-4150 Krefeld(DE)**

## Beschreibung

Die Erfindung betrifft eine Vorrichtung zum Erzeugen von Heißgas für das Schrumpfen von Kunststoffolien, -mit einem Gehäuse, in dem ein Brenner angeordnet ist und das eine Austrittsdüse für die Heißgase aufweist, wobei zwischen dem Brenner und den Gehäusewandungen Lamellen angeordnet sind und der Zwischenraum zwischen den Lamellen und den Gehäusewandungen an eine Kühlluftquelle angeschlossen ist, und wobei die von der Austrittsdüse definierte Austrittsrichtung der Heißgase sich unter einem Winkel zur Strömungsrichtung der aus dem Brenner austretenden Abgase erstreckt.

In der Praxis werden derartige Vorrichtungen als Rahmen ausgeführt, der häufig auch als Ringbrenner bezeichnet wird. Die innere Öffnung des Rahmens ist so groß, daß der Rahmen einen mit einer Schrumpfhaube überzogenen Gutstapel umgebend, auf- und abbewegt werden kann, und dabei das Material der Schrumpfhaube schrumpft.

Wichtig beim Schrumpfen von Schrumpfhauben bzw Kunststoffolien ist, daß die Temperatur des aus der Vorrichtung austretenden Heißgases in bestimmten Grenzen bleibt und daß insbesondere auch keine Flammen aus der Austrittsdüse des Gehäuses austreten. Das alles leistet eine Vorrichtung der eingangs beschriebenen Gattung (EP-PS 00 64 636), die sich auch in der Praxis bewährt hat. Bei der bekannten Ausführung findet die Mischung der Abgase des oder der Brenner mit Kühlluft aber erst im Bereich der Austrittsdüse statt, so daß die Temperaturverteilung des austretenden Heißgases über den Querschnitt der Düse nicht immer gleichmäßig ist. Hier will die Erfindung Abhilfe schaffen.

Aufgabe der Erfindung ist es, einen Heißgasstrahl mit über den Querschnitt der Austrittsdüse gleichmäßiger Temperaturverteilung zu erzeugen.

Diese Aufgabe wird dadurch gelöst, daß das Gehäuse einen rechteckförmigen Querschnitt aufweist, daß der Brenner im Bereich einer kurzen Rechtecksseite und die Austrittsdüse im Bereich der anderen kurzen Rechtecksseite angeordnet ist, und daß zur Erzeugung eines Luftmantels um die aus dem Brenner austretenden Abgase der Abstand der Lamellen von der Gehäusewandung größer ist als ihr Abstand zum Brenner.

Mit dem den Abgasen des Brenners zugeführten Luftmantel wird eine frühzeitige Kühlung der Abgase erreicht, weil sich der im Luftmantel mitgeführte Kühlluftstrom mit den Abgasen des Brenners auf dem Wege zur Austrittsdüse mischt, so daß die dort austretenden Heißgase eine gleichmäßige Temperaturverteilung über den Querschnitt der Austrittsdüse besitzen. Der Mischungsweg ist relativ lang, weil das Gehäuse einen rechteckigen Querschnitt hat und der Brenner im Bereich der einen Schmalseite und die Austrittsdüse im Bereich der anderen Schmalseite angeordnet ist.

Diese Verhältnisse können noch verbessert werden, wenn der gegenseitige Abstand der Lamellen sich im Bereich der aus dem Brenner austretenden Abgase verringert, weil damit eine düsenartige Wirkung der Lamellen verbunden ist. Das gilt insbesondere dann, wenn die Lamellen mit Abstand vor den kurzen Rechteckseiten des Gehäusequerschnittes enden, so daß hinter dem Ende der Lamellenwirkung aufgrund der sich ändernden Druckverhältnisse eine zusätzliche Durchmischung eintritt.

Zweckmäßig sollte die Kühlluftquelle an der kurzen Rechteckseite hinter dem Brenner münden, damit die Kühlluft den gesamten Gehäusequerschnitt in Richtung des Strahls durchströmen kann und insbesondere auch die Bildung des Luftmantels im Brennerbereich durch Injektorwirkung des Brenners unterstützt wird. Zusätzlich kann zwischen der Mündung der Kühlluftwelle und dem Brenner ein Prallkörper angeordnet werden, der eine Verwirbelung und Verteilung der Kühlluft derart bewirkt, daß auch die Gehäusewandungen gekühlt werden.

Zur weiteren Beeinflussung der Heißgase innerhalb des Gehäuses kann zwischen dem Ende der Lamellen und der Austrittsdüse wenigstens eine Kaltluftdüse angeordnet sein, die vorzugsweise auf die Austrittsdüse gerichtet ist. Über diese Kaltluftdüse kann gezielt, z. B. in Abhängigkeit von einer Temperaturmessung im Bereich der Austrittsdüse weitere Kaltluft zugeführt werden.

Um auch die Wärmebelastung der die Austrittsdüse begrenzenden Wandungen in Grenzen zu halten, können auch im Bereich der die Austrittsdüse begrenzenden Wandungen Kaltluftdüsen angeordnet sein, die im wesentlichen tangential zu diesen Wandungen gerichtet sind.

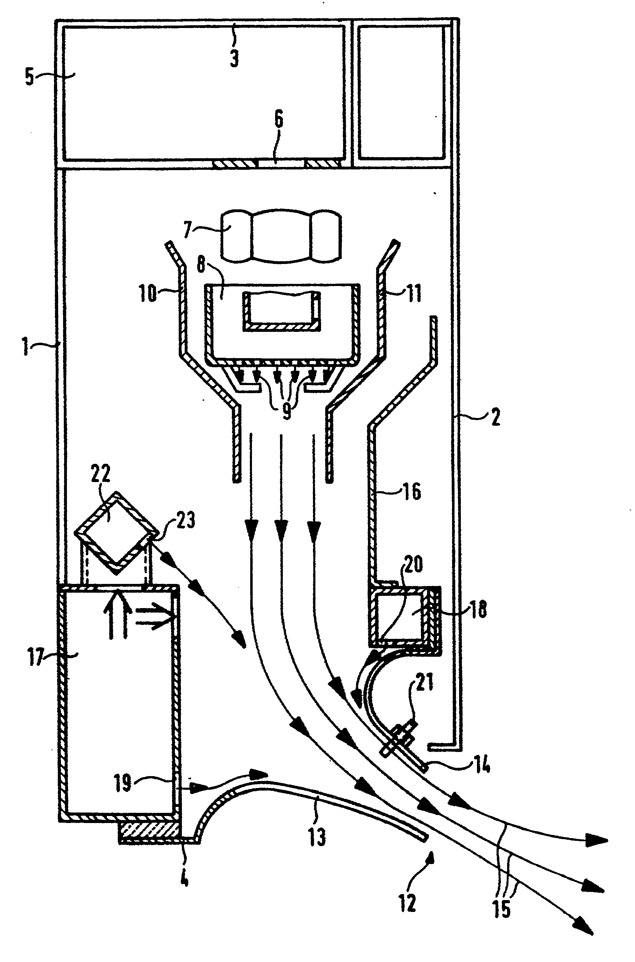

Im folgenden wird ein in der Zeichnung dargestelltes Ausführungsbeispiel der Erfindung erläutert; die einzige Figur zeigt in schematischer Darstellung einen Schnitt durch eine Vorrichtung zum Erzeugen von Heißgas für das Schrumpfen von Kunststoffolien.

Dargestellt ist ein Vertikalschnitt durch eine rahmenartige Vorrichtung zum Schrumpfen von Schrumpfhauben, die einen palettierten Gutstapel umgeben. Der Rahmen weist ein im wesentlichen rechteckiges Gehäuse auf mit vertikalen, langen Gehäusewandungen 1, 2 und horizontalen, kurzen Gehäusewandungen 3, 4. Unter der oberen kurzen Gehäusewandung 3 verläuft ein Kühlluftkanal 5 mit in das Gehäuse gerichteten Kühlluftauslaß 6. Unter dem Kühlluftauslaß 6 befindet sich ein Prallkörper 7. Unter dem Prallkörper 7 ist ein Brenner 8 angeordnet, der in nicht dargestellter Weise mit Brenngasen versorgt wird. Die Flammen bzw. Abgase verlassen den Brenner 8 an seiner Unterseite, wie das mit Pfeilen 9 angedeutet ist.

Beidseits des Brenners 8 befinden sich Lamellen 10, 11, die sich etwa von der Höhe des Prallkörpers 7 neben dem Brenner 8 und über diesen hinaus in das Gehäuse erstrecken. Der Abstand der Lamellen 10, 11 von den benachbarten Gehäusewandungen 1 bzw. 2 ist größer als der Abstand zum Brenner 8, so daß ein Teil der über den Kühlluftauslaß 6 zugeführten Kühlluft durch Injektorwirkung des Brenners 8 zwischen die Lamellen 10, 11 eingezogen wird und einen den aus dem Brenner 8 austretenden Abgasstrahl umgebenden Luftmantel bildet. Die restliche Kühlluft strömt zwischen den Lamellen 10 bzw. 11 und den benachbarten Gehäusewandungen 1 bzw. 2 und kühlt diese Gehäusewandungen 1, 2.

Die Lamellen 10, 11 erstrecken sich in Strahlrichtung über den Brenner 8 hinaus und enden in einem Abstand vom Brenner 8, der bei der dargestellten Ausführung in etwa der Höhe des Brenners 8 entspricht. In Strahlrichtung hinter dem Brenner 8 ist der gegenseitige Abstand der Lamellen 10, 11 düsenartig verringert.

Der den Brenner 8 verlassende Abgasstrahl vermischt sich auf dem Wege zu einer im Bereich der unteren, kurzen Gehäusewandung 4 angeordneten Austrittsdüse 12 zunächst mit der vom Luftmantel mitgeführten Kühlluft und nach Verlassen des Lamellenbereichs auch mit der außerhalb der Lamellen 10, 11 strömenden Kühlluft.

Wie in der Zeichnung dargestellt, wird die Austrittsdüse 12 von Wandungen 13, 14 begrenzt und definiert eine Heißgasaustrittsrichtung 15, die mit der Strahlrichtung der den Brenner 8 verlassenden Abgase einen stumpfen Winkel bildet. Die damit verbundene Strahlumlenkung führt zu einer weiteren Vermischung von Abgasen und Kühlluft, so daß die aus der Austrittsdüse 12 austretenden Heißgase eine gleichmäßige Temperaturverteilung über den Querschnitt der Austrittsdüse besitzen.

Wie man der Zeichnung entnimmt, schließt die untere Wandung 13 der Austrittsdüse 12 direkt an die untere, kurze Gehäusewandung 4 an. Die andere Wandung 14 der Austrittsdüse 12 ist zusammen mit einer sich im wesentlichen parallel zu langen Gehäusewandung 2 erstreckenden Trennwand 16 verbunden und zusammen mit dieser in Richtung der langen Gehäusewand 2 verstellbar. Durch Verstellung kann die Öffnung der Austrittsdüse 12 vergrößert oder verkleinert werden.

Um eine unerwünschte Aufheizung und/oder Wärmebelastung der Wandungen 13, 14 der Austrittsdüse 12 zu vermeiden, sind im Bereich dieser Wandungen 13, 14 Kaltluftkanäle 17, 18 mit Kaltluftdüsen 19, 20 angeordnet, wobei diese Kaltluftdüsen 19, 20 etwa tangential zu den benachbarten Abschnitten der Wandungen 13, 14 gerichtet sind. An der oberen Wandung 14 der Austrittsdüse 12 ist ein Temperaturfühler 21 eingeordnet.

Der Kaltluftkanal 17 steht mit einem oberhalb davon und parallel dazu angeordneten Zweigkanal 22 in Verbindung, der eine Kaltluftdüse 23 aufweist, die bei der dargestellten Ausführung in Richtung auf die Austrittsdüse 12 gerichtet ist. Die aus dieser Kaltluftdüse 23 austretende Kaltluft unterstützt die Strahlumlenkung und trägt ebenfalls zur weiteren Mischung von Kaltluft bzw. Kühlluft und Abgasen sowie damit zu einer Vergleichmäßigung des Temperaturprofils der die Austrittsdüse 12 verlassenden Heißgase bei.

**Patentansprüche**

1. Vorrichtung zum Erzeugen von Heißgas für das Schrumpfen von Kunststoffolien, –mit einem Gehäuse, in dem ein Brenner (8) angeordnet ist und das eine Austrittsdüse (12) für die Heißgase aufweist, wobei zwischen dem Brenner (8) und den Gehäusewandungen (1, 2) Lamellen (10, 11) angeordnet sind und der Zwischenraum zwischen den Lamellen (10, 11) und den Gehäusewandungen an eine Kühlluftquelle (5) angeschlossen ist, und wobei die von der Austrittsdüse (12) definierte Austrittsrichtung (15) der Heißgase sich unter einem Winkel zur Strömungsrichtung (9) der aus dem Brenner (8) austretenden Abgase erstreckt, dadurch gekennzeichnet, daß das Gehäuse einen rechteckförmigen Querschnitt aufweist, daß der Brenner (8) im Bereich einer kurzen Rechteckseite (3) und die Austrittsdüse (12) im Bereich der anderen kurzen Rechteckseite (4) angeordnet ist, und daß zur Erzeugung eines Luftmantels um die aus dem Brenner (8) austretenden Abgase der Abstand der Lamellen (10, 11) von der Gehäusewandung (1, 2) größer ist als ihr Abstand zum Brenner (8).

2. Vorrichtung nach Anspruch 1, dadurch gekennzeichnet, daß der gegenseitige Abstand der Lamellen (10, 11) sich im Bereich der aus dem Brenner (8) austretenden Abgase verringert.

3. Vorrichtung nach Anspruch 1 oder 2, dadurch gekenn zeichnet, daß die Lamellen (10, 11) mit Abstand vor den kurzen Rechteckseiten (3, 4) des Gehäusequerschnitts enden.

4. Vorrichtung nach einem der Ansprüche 1 bis 3, dadurch gekennzeichnet, daß die Kühlluftquelle (5) an der kurzen Rechteckseite (3) hinter den Brenner (8) mündet.

5. Vorrichtung nach einem der Ansprüche 1 bis 4, dadurch gekennzeichnet, daß zwischen der Mündung (6) der Kühlluftquelle (5) und dem Brenner (8) ein Prallkörper (7) angeordnet ist.

6. Vorrichtung nach einem der Ansprüche 1 bis 6, dadurch gekennzeichnet, daß zwischen dem Ende der Lamellen (10, 11) und der Austrittsdüse (12) wenigstens eine Kaltluftdüse (23) angeordnet ist.

7. Vorrichtung nach einem der Ansprüche 1 bis 6, dadurch gekennzeichnet, daß die Kaltluftdüse (23) auf die Austrittsdüse (12) gerichtet ist.

8. Vorrichtung nach einem der Ansprüche 1 bis 7, dadurch gekennzeichnet, daß im Bereich der die Austrittsdüse (12) begrenzenden Wandungen (13, 14) Kaltluftdüsen (19, 20) angeordnet sind, die im wesentlichen tangential zu diesen Wandungen (13, 14) gerichtet sind.

**Claims**

1. Device for generating hot gas for shrinking plastics material films, having a housing, which accommodates a burner (8) and has an outlet nozzle (12) for the hot gases, wherein strips (10, 11) are disposed between the burner (8) and the housing walls (1, 2) and the intermediate space between the strips (10, 11) and the housing walls (1, 2) communicates with a source of cooling air (5), and wherein the discharge direction (15) of the hot gases, as defined by the outlet nozzle (12), extends at an angle relative to the flow direction (9) of the waste gases emerging from the burner (8), characterised in that the housing has a rectangular cross-section, the burner (8) is disposed in the region of a short side (3) of the rectangle and the outlet nozzle (12) is disposed in the region of the other short side (4) of the rectangle, and, in order to produce a covering of air around the waste gases emerging from the burner (8), the spacing of the strips (10, 11) from the housing wall (1, 2) is greater than their spacing from the burner (8).

2. Device according to claim 1, characterised in that the mutual spacing between the strips (10, 11) decreases in the region of the waste gases emerging from the burner (8).

3. Device according to claim 1 or 2, characterised in that the strips (10, 11) terminate with a spacing in front of the short sides (3, 4) of the rectangle of the housing cross-section.

4. Device according to one of claims 1 to 3, characterised in that the source of cooling air (5) on the short side (3) of the rectangle extends behind the burner (8).

5. Device according to one of claims 1 to 4, characterised in that a deflecting member (7) is disposed between the mouth (6) of the source of cooling air (5) and the burner (8).

6. Device according to one of claims 1 to 5, characterised in that at least one cold air nozzle (23) is disposed between the end of the strips (10, 11) and the outlet nozzle (12).

7. Device according to one of claims 1 to 6, characterised in that the cold air nozzle (23) is directed towards the outlet nozzle (12).

8. Device according to one of claims 1 to 7, characterised in that cold air nozzles (19, 20) are disposed in the region of the walls (13, 14), which define the outlet nozzle (12), and said nozzles are orientated substantially tangentially relative to these walls (13, 14).

## Revendications

1. Dispositif pour engendrer des gaz chauds pour le rétrécissement de feuilles de matière plastique, comprenant un carter dans lequel est disposé un brûleur (8) et qui comporte une buse de sortie (12) pour les gaz chauds, cependant que des lamelles (10, 11) sont disposées entre le brûleur (8) et les parois (1, 2) du carter, que l'intervalle entre les lamelles (10, 11) et les parois (1, 2) du carter est relié à une source d'air de refroidissment (5), et que la direction de sortie (15) des gaz chauds définie par la buse de sortie (12) s'étend en formant un angle par rapport à la direction d'écoulement (9) des gaz de combustion sortant du brûleur (8), caractérisé par le fait que le carter présente une section transversale en forme de rectangle, par le fait que le brûleur (8) est disposé dans la région d'un petit côté (3) du rectangle et que la buse de sortie (12) est disposée dans la région de l'autre petit côté (4) du rectangle, et par le fait qu'afin d'engendrer une chape d'air autour des gaz de combustion qui sortent du brûleur (8), la distance des lamelles (10, 11) par rapport à la paroi (1, 2) du carter est supérieure à sa distance par rapport au brûleur (8).

2. Dispositif selon la revendication 1, caractérisé par le fait que la distance mutuelle des lamelles (10, 11) diminue dans la région des gaz de combustion qui sortent du brûleur (8).

3. Dispositif selon la revendication 1 ou 2, caractérisé par le fait que les lamelles (10, 11) se terminent avant les petits côtés (3, 4) du rectangle et à distance de ceux-ci.

4. Dispositif selon l'une des revendications 1 à 3, caractérisé par le fait que la source d'air de refroidissement (5) débouche sur le petit côté (3) du rectangle, derrière le brûleur (8).

5. Dispositif selon l'une des revendications 1 à 4, caractérisé par le fait qu'un corps d'impact (7) est disposé entre l'embouchure (6) de la source d'air de refroidissement (5) et le brûleur (8).

6. Dispositif selon l'une des revendications 1 à 5, caractérisé par le fait qu'au moins une buse d'air de refroidissement (23) est disposée entre l'extrémité des lamelles (10, 11) et la buse de sortie (12).

7. Dispositif selon l'une des revendications 1 à 6, caractérisé par le fait que la buse d'air de refroidissement (23) est dirigée sur la buse de sortie (12).

8. Dispositif selon l'une des revendications 1 à 7, caractérisé par le fait que sont disposées dans la région des parois (13, 14) qui délimitent la buse de sortie (12) des buses d'air de refroidissement (19, 20) qui sont dirigées pour l'essentiel de manière tangentielle par rapport à ces parois (13, 14).

EP 0 282 849 B1